# EUROPÄISCHE PATENTSCHRIFT

(11) **EP 3 384 756 B1**
(45) Veröffentlichungstag und Bekanntmachung des Hinweises auf die Patenterteilung: **25.09.2019**
(21) Anmeldenummer: 17164611.0
(22) Anmeldetag: 03.04.2017
(51) Int. Cl.: A01D 78/10, A01B 79/00

(54) **VERFAHREN ZUM STEUERN EINER LANDWIRTSCHAFTLICHEN MASCHINE BEIM SCHWADEN EINES ERNTEGUTS AUF EINER LANDWIRTSCHAFTLICHEN NUTZFLÄCHE UND LANDWIRTSCHAFTLICHE MASCHINE**
METHOD FOR CONTROLLING AN AGRICULTURAL MACHINE WHEN WINDROWING A CROP ON AN AGRICULTURAL AREA AND AGRICULTURAL MACHINE
PROCÉDÉ DE COMMANDE D'UN ENGIN AGRICOLE LORS DE LA MISE EN ANDAINS D'UNE RÉCOLTE SUR UNE SURFACE AGRICOLE UTILE ET ENGIN AGRICOLE

(43) Veröffentlichungstag der Anmeldung: 10.10.2018
(73) Patentinhaber: Kverneland Group Kerteminde AS, 5300 Kerteminde (DK)
(72) Erfinder: Pauli, Marco, 78256 Steißlingen (DE); Hagemann, Sebastian, 34439 Willebadessen (DE); Leute, Manuel, 78166 Donauschingen (DE)
(74) Vertreter: Bittner, Thomas L.

(56) Entgegenhaltungen:
- EP-A1- 2 436 252
- EP-A2- 1 915 894
- EP-A2- 2 277 370
- WO-A1-2011/115477
- US-A- 5 995 902
- US-A- 6 104 979

## Beschreibung

Die Erfindung betrifft ein Verfahren zum Steuern einer landwirtschaftlichen Maschine beim Schwaden eines Ernteguts auf einer landwirtschaftlichen Nutzfläche sowie eine landwirtschaftliche Maschine.

### Hintergrund

Beim Ernten von Nutzpflanzen in der Landwirtschaft kann vorgesehen sein, ein zuvor gemähtes oder geschnittenes Erntegut auf der landwirtschaftlichen Nutzfläche mithilfe eines Schwaders so zu verlegen oder zu schwaden, derart, dass auf der landwirtschaftlichen Nutzfläche Schwade hergestellt werden, entlang welcher das Erntegut dann angeordnet ist und aufgenommen werden kann, beispielsweise von einer Ballenpresse, einem Häcksler oder einem Ladewagen.

Schwader sind in verschiedenen Ausführungsformen als solche bekannt. Beispielsweise verfügen Schwader, die von einem Zugfahrzeug über die landwirtschaftliche Nutzfläche gezogen werden, über einen Tragrahmen, an dem mehrere Rechgeräte aufgenommen sind, beispielsweise in Form von Rechkreiseln. So sind für Schwader Ausführungen bekannt, bei denen eine Kombination von Rechgeräten, beispielsweise eine Kombination von Rechkreiseln, an dem Tragrahmen aufgenommen ist, derart, dass Rechgeräte paarweise zugeordnet und beidseitig eines mittleren Trägerbauteils des Tragrahmens angeordnet sind. Hierbei kann vorgesehen sein, dass in Fahrtrichtung vordere Rechgeräte quer zur Fahrtrichtung mit größerem Abstand zueinander angeordnet sind als in Fahrtrichtung hinten positionierte Rechgeräte. Beispielsweise ist ein Schwader mit vier Rechkreiseln bekannt.

Aus dem Dokument EP 2 436 252 A1 ist eine Vorrichtung zum Betreiben einer Rechkreiselaushubsteuerung bekannt. Die Rechkreiselaushubsteuerung für einen Mehrkreiselschwader weist wenigstens vier umlaufend angetriebene an Auslegar-men angelenkte Schwadkreisel auf, welche in der bodennahen Arbeitsstellung von Tast- und Stützrädern am Boden abgestützt am Boden liegendes Halmgut zusam-menrechen und dadurch eine Schwad bilden und ablegen. Die Schwadkreisel kön-nen mittels anheben der Auslegearme von einer bodennahen in eine bodenferne Transport- oder Zwischenstellung angehoben werden, wobei die Rechkreiselaus-hubsteuerung ein rechnergestütztes GPS-gesteuertes elektronisches System zur Schwadbildung aufweist und wobei der Mehrkreiselschwader wenigstens einen ersten GPS-Empfänger für eine rechnergestützte Rechkreiselaushubsteuerung zur Schwadbildung aufweist.

### Zusammenfassung

Aufgabe der Erfindung ist es, ein Verfahren zum Steuern einer landwirtschaftlichen Maschine beim Schwaden eines Ernteguts auf einer landwirtschaftlichen Nutzfläche sowie eine Anordnung mit einer landwirtschaftlichen Maschine anzugeben, mit denen ein verbessertes Schwaden beim Ernten ermöglicht ist.

Gelöst wird die Aufgabe durch ein Verfahren zum Steuern einer landwirtschaftlichen Maschine beim Schwaden eines Ernteguts auf einer landwirtschaftlichen Nutzfläche sowie einer Anordnung mit einer landwirtschaftlichen Maschine nach den unabhängigen Ansprüchen 1 und 10. Alternative Ausgestaltungen sind Gegenstand von abhängigen Unteransprüchen.

Nach einem Aspekt ist ein Verfahren zum Steuern einer landwirtschaftlichen Maschine beim Schwaden eines Ernteguts auf einer landwirtschaftlichen Nutzfläche geschaffen. Bei dem Verfahren wird eine landwirtschaftliche Maschine mit einem Schwader bereitgestellt, bei dem an einem Traggestell eine Kombination von Rechgeräten angeordnet ist, die eingerichtet sind, ein Erntegut auf einer landwirtschaftlichen Nutzfläche zu schwaden. Die landwirtschaftliche Maschine mit dem Schwader wird auf der landwirtschaftlichen Nutzfläche bewegt, um hierbei das Erntegut zu schwaden. Während die landwirtschaftliche Maschine auf der landwirtschaftlichen Nutzfläche bewegt wird, erfolgt eine wiederholte Bestimmung von Maschinen-Positionsdaten für die landwirtschaftliche Maschine mittels eines Positionsbestimmungssystems, wobei die Maschinen-Positionsdaten eine momentane Position der landwirtschaftlichen Maschine auf der landwirtschaftlichen Nutzfläche anzeigen. Es werden elektronische Ortsinformationen bereitgestellt, wobei die elektronischen Ortsinformationen Positionsinformationen umfassen, die eine Verteilung des zu schwadenden Ernteguts entlang einer nichtgeraden Linie in einem Teilbereich der landwirtschaftlichen Nutzfläche anzeigen. Die Rechgeräte werden mittels von einer Steuereinrichtung erzeugten Steuersignalen gesteuert, wenn bei einer Datenverarbeitung der Maschinen-Positionsdaten und der Positionsinformationen mittels der Steuereinrichtung bestimmt wird, dass das Erntegut in dem Teilbereich der landwirtschaftlichen Nutzfläche geschwadet wird, derart, dass eine Arbeitsstellung eine oder mehrere Rechgeräte positionsabhängig eingestellt und verändert wird, um das entlang der nichtgeraden Linie verteilte Erntegut in einen Schwad zu schwaden, welcher entlang einer geraden Schwadlinie verlaufend hergestellt wird, wobei beim positionsabhängigen Einstellen und Verändern der Arbeitsstellung das eine oder die mehreren Rechgeräte zwischen einer angehobenen Nichtarbeitsstellung sowie einer abgesenkten Arbeitsstellung und / oder, in Bezug auf den Tragrahmen, zwischen einer Tragrahmen proximalen sowie einer distalen Arbeitsstellung verlagert werden.

Nach einem weiteren Aspekt ist eine Anordnung mit einer landwirtschaftlichen Maschine zum Schwaden eines Ernteguts auf einer landwirtschaftlichen Nutzfläche geschaffen, welche einen Schwader aufweist, bei dem an einem Traggestell eine Kombination von Rechgeräten angeordnet ist, die eingerichtet ist, ein Erntegut auf einer landwirtschaftlichen Nutzfläche zu schwaden. Die Anordnung weist ein Positionsbestimmungssystem und eine Steuereinrichtung auf. Die Anordnung ist eingerichtet, beim Schwaden des Ernteguts auf der landwirtschaftlichen Nutzfläche das Verfahren zum Steuern der landwirtschaftlichen Maschine beim Schwaden des Ernteguts auszuführen.

Mithilfe der vorgeschlagenen Technologien ist es ermöglicht, Erntegut, das sich auf der landwirtschaftlichen Nutzfläche entlang der nichtgeraden Linie verteilt, zusammenzurechen, sodass ein oder mehrere gerade Schwade hergestellt werden, die danach aufgenommen werden kann, beispielsweise mit einer Ballenpresse, einem Häcksler oder einem Ladewagen. Beim Aufnehmen des Ernteguts entlang des geradlinigen Schwads muss das Zugfahrzeug des aufnehmenden Geräts keine oder nur wenige Lenkbewegungen ausführen, was den Boden im Bereich der landwirtschaftlichen Nutzfläche schont. Darüber hinaus kann auf diese Weise Kraftstoff eingespart werden. Auch unterstützt die geradlinige Schwadausbildung ein möglichst effizientes Aufnehmen des Ernteguts von der landwirtschaftlichen Nutzfläche.

Bei dem Schwader können die Rechgeräte an sich quer zur Fahrtrichtung erstreckenden Armen oder Auslegern angeordnet sein. In einer möglichen Ausgestaltung weisen die Rechengeräte jeweils einen Rechkreisel auf, die gleiche oder unterschiedliche Durchmesser aufweisen können. In Fahrtrichtung vordere Rechkreisel können einen größeren Durchmesser aufweisen als hintere Rechkreisel. Auf diese Weise kann im Bereich der vorderen Rechgeräte eine größere Arbeitsbreite bereitgestellt sein. Es kann ein Schwader vorgesehen sein, bei dem quer zur Fahrtrichtung paarweise Rechgeräte auf gegenüberliegenden Seiten eines mittleren Trägerbauteils des Tragrahmens angeordnet sind, zum Beispiel vier Rechgeräte.

Die Verlagerung zwischen der abgesenkten Arbeitsstellung, in welcher das Rechgerät das Erntegut bearbeiten also schwaden kann, und der angehobenen Nichtarbeitsstellung kann mittels Schwenken des Rechgeräts um eine horizontale Schwenkachse ausgeführt werden. Beim Verlagern in die angehobene Nichtarbeitsstellung kann das Rechgerät zum mittleren Teil des Tragrahmens hin verlagert werden, beispielsweise mittels Schwenken, insbesondere um eine horizontale Schwenkachse. Zum Verlagern zwischen der in Bezug auf den Tragrahmen proximalen und der distalen Arbeitsstellung kann vorgesehen sein, das Rechgerät an einem teleskopierbaren Arm oder an einem Schwenkarm aufzunehmen, der beispielsweise um eine vertikale Schwenkachse schwenkbar ist, sodass das Rechgerät in den verschiedenen Ausführungsformen zwischen unterschiedlichen Arbeitsstellungen verlagerbar ist, in denen das Rechgerät jeweils das Erntegut bearbeiten kann, wobei es in unterschiedlichem Abstand zum mittleren Teil des Tragrahmens angeordnet ist. Die verschiedenen Arbeitsstellungen unterscheiden sich dadurch, dass das Rechgerät mehr oder weniger beabstandet von dem Tragrahmen angeordnet ist, insbesondere vom mittleren Teil, wodurch üblicherweise die Arbeitsbreite des Schwaders verändert wird.

Der Schwader kann zum Beispiel zwei oder vier Rechgeräte aufweisen, beispielweise in Form eines jeweiligen Rechkreisels, die in Fahrtrichtung paarweise gegenüberliegend und hintereinander angeordnet sind. Hierbei können vordere Rechkreisel einen größeren Durchmesser aufweisen als hintere Rechkreise, wobei die vorderen und die hinteren Rechkreise jeweils paarweise einen gleichen Durchmesser aufweisen können.

Die nichtgerade Linie, entlang welcher das zu schwadende Erntegut verteilt ist, kann eine Randlinie eines Bereiches der landwirtschaftlichen Nutzfläche betreffen, auf der das Erntegut verteilt ist. Alternativ oder ergänzend kann die nichtgerade Linie eine Mittellinie eines zuvor erstellten Schwads betreffen, der beispielsweise beim Mähen erzeugt wurde. Der Schwad verläuft entlang der nicht geraden Linie. Die hier angegebenen Technologien ermöglichen es in den verschiedenen Ausgestaltungen, das Erntegut, sei es aus einer gleichmäßigen flächigen Verteilung und / oder aus einer vorher erzeugten Schwadverteilung, in einen Schwad zu verbringen, der sich entlang einer geradlinigen Schwadlinie erstreckt. Die Schwadlinie kann hierbei eine gerade Mittellinie des Schwads sein.

Die nichtgerade Schwadlinie kann zum Beispiel eine gekrümmte Linie oder eine Wellenlinie sein.

Im Rahmen der Schwadbegradigung kann eine solche Linie mittels der positionsabhängigen Maschinesteuerung Schritt für Schritt begradigt werden, derart, dass ausgehend von der nichtgeraden Linie, entlang welcher sich das zu schwadende Erntegut verteilt, ein Schwad erzeugt wird, welcher noch entlang einer (weniger) gekrümmten Schwadlinie verläuft, aber mit größerem Krümmungsradius. Schon nach wenigen Schwadlinien kann mithilfe der hier vorgeschlagenen Technologien dann der Krümmungsradius immer größer erzeugt werden, sodass sich schließlich der Schwad mit der geraden Schwadlinie ergibt. Die Rechgeräte können positionsabhängig gesteuert werden, um die Begradigung in einem oder mehreren Schritten auszuführen.

Die nichtgerade Linie, entlang welcher das zu schwadende Erntegut verteilt ist, kann im Wesentlichen parallel zu einem nichtgeraden Rand der landwirtschaftlichen Nutzfläche verlaufen. Eine derartige Verteilung des zu schwadenden Ernteguts ergibt sich beispielsweise dann, wenn die Mähmaschine der äußeren Umfangskontur der landwirtschaftlichen Nutzfläche folgend arbeitet und so nichtgeraden Randlinien der landwirtschaftlichen Nutzfläche folgt. Beim anschließenden Schwaden können mithilfe der hier vorgeschlagenen Technologien im Wesentlichen durchgehend gerade Schwadlinien erzeugt werden.

Bei dem Positionsbestimmungssystem kann es sich um ein Navigationssystem handeln, beispielsweise ein satellitengestütztes Navigationssystem. Das Positionsbestimmungssystem kann vollständig oder nur mit Teilkomponenten auf der landwirtschaftlichen Maschine, insbesondere auf dem Schwader und / oder einem Zugfahrzeug angeordnet sein, mit dem der Schwader über die landwirtschaftliche Nutzfläche bewegt wird. Positionsbestimmungssysteme sind als solche in verschiedenen Ausführungsformen bekannt. Das Positionsbestimmungssystem kann zum Austausch elektronischer Daten mit einer zentralen Servereinrichtung in Verbindung stehen, zum Beispiel einer Datenbank.

Die Steuereinrichtung, mit der die Steuersignale zum Steuern der Rechgeräte erzeugt werden, kann vollständig oder teilweise auf der landwirtschaftlichen Maschine, insbesondere dem Schwader und / oder dem Zugfahrzeug, angeordnet sein. Teilkomponenten können in einer zentralen Servereinrichtung vorgesehen sein, zum Beispiel eine Software-Applikation zum Vergleich der Maschinen-Positionsdaten und der Positionsinformation betreffend die nichtgerade Linie in dem Teilbereich der landwirtschaftlichen Nutzfläche. Über die zentrale Servereinrichtung können Ortsdaten für die landwirtschaftliche Nutzfläche bereitgestellt werden, zum Beispiel Informationen betreffend den Konturverlauf des umlaufenden Randes.

Der Datenaustausch zwischen funktionellen Komponenten kann kabelgebunden oder drahtlos ausgeführt werden. Zur Datenkommunikation zwischen der Steuereinrichtung und lokalen Steuereinheiten an den Rechgeräten kann zum Beispiel ein ISOBUS-System genutzt werden.

Bei der landwirtschaftlichen Maschine kann der Schwader an ein Zugfahrzeug koppeln, mit dem der Schwader über die landwirtschaftliche Nutzfläche bewegt wird. Bei dem Zugfahrzeug kann eine positionsabhängige automatische Lenksteuerung ausgeführt werden, zumindest wenn bei der Datenverarbeitung der Maschinen-Positionsdaten und der Positionsinformationen mittels der Steuereinrichtung bestimmt wird, dass das Erntegut in dem Teilbereich der landwirtschaftlichen Nutzfläche geschwadet wird. Bei dieser Ausführungsform ist ein Zugfahrzeug vorgesehen, um den Schwader zu ziehen. Alternativ kann ein selbstfahrender Schwader vorgesehen sein. Beim Schwaden des Ernteguts ist bei dieser Ausgestaltung ergänzend zur Steuerung der Rechgeräte eine automatische Lenksteuerung vorgesehen, was auch im Fall des selbstfahrenden Schwaders eine Option ist, beispielsweise um den vom Schwader zurückgelegten Weg zumindest teilweise der nichtgeraden Linie nachzubilden. In Kombination mit der Steuerung der Rechgeräte kann so der Prozess zum Herstellen des geradlinigen Schwads weiter optimiert werden.

Beim Bereitstellen der elektronischen Ortsinformationen können zum Bestimmen der Positionsinformation Nutzflächeninformationen verarbeitet werden, die zumindest eine äußere Umfangskontur der landwirtschaftlichen Nutzfläche anzeigen. Ist die äußere Umfangskontur der landwirtschaftlichen Nutzfläche in Form elektronischer Daten bekannt, sei es lokal auf dem landwirtschaftlichen Maschine und / oder in der zentralen Servereinrichtung, so kann hieraus in einer Ausführungsform die nichtgerade Linie bestimmt werden, entlang welcher sich das zu schwadende Erntegut verteilt, beispielsweise dadurch, dass ein zuvor erzeugter Schwad angenommen wird, welcher sich in parallelem Abstand zu einem nichtgeradlinige Rand der landwirtschaftlichen Nutzfläche erstreckt.

Die Positionsinformationen können vor dem Schwaden beim Mähen und / oder Wenden des Ernteguts und / oder beim Abfahren der landwirtschaftlichen Nutzfläche erfasst werden. Insbesondere dann, wenn am Beginn des Schwadens des Ernteguts zum Herstellen der geraden Schwadlinie keine elektronischen Informationen über die Verteilung des Ernteguts auf der landwirtschaftlichen Nutzfläche und / oder die äußere Umfangskontur der landwirtschaftlichen Nutzfläche vorliegen, kann diese Ausgestaltung genutzt werden, um die Positionsinformationen zu erfassen. Hierzu wird beispielsweise der Fahrweg bei einer ersten Umfahrung der landwirtschaftlichen Nutzfläche im Rahmen des Schwadens aufgezeichnet. Alternativ können derartige Positionsinformationen auch vorab in der zentralen Servereinrichtung oder einer Datenbank vorliegen, um diese Informationen dann vor Beginn des Schwadens in die Steuereinrichtung zu laden.

Beim Schwaden des Ernteguts entlang der nichtgeraden Linie kann in dem Teilbereich der landwirtschaftlichen Nutzfläche die Arbeitsstellung mindestens eines der Rechgeräte auf einer Seite des Tragrahmens positionsabhängig eingestellt und verändert werden, wohingegen sich die Arbeitsstellung für ein oder alle Rechgeräte, die auf einer gegenüberliegenden Seite des Tragrahmens angeordnet sind, insbesondere auf der gegenüberliegenden Seite eines mittleren Bauteils des Tragrahmens, unverändert bleibt. Bei dieser Ausführungsform erfolgt das Rechen des Ernteguts auf der Seite des Tragrahmens, auf welcher die Arbeitsstellung für das eine oder für alle Rechgeräte unverändert bleibt, zum Erfassen eines gleichbleibend breiten Streifens entlang des Fahrwegs. Auf der gegenüberliegenden Seite, auf der ein oder mehrere Rechgeräte positionsabhängig gesteuert werden, derart, dass ihre Arbeitsstellung eingestellt und verändert wird, wird das Erntegut der nichtgeraden Linie entsprechend ortsabhängig erfasst. So kann beispielsweise vorgesehen sein, dass ein Rechgerät in eine distale Stellung (größerer Abstand zum Tragrahmen) verlagert wird, um Erntegut zu erfassen, welches vom Tragrahmen des Schwaders weiter entfernt ist. Kommt die nichtgerade Linie näher an den Tragrahmen heran, kann das Rechgerät in eine proximale Stellung verlagert werden. Auf der gegenüberliegenden Seite des Tragrahmens bleiben demgegenüber sämtliche dort angeordnete Rechgeräte in einer unveränderten Arbeitsstellung.

Beim Schwaden des Ernteguts entlang der nichtgeraden Linie kann in dem Teilbereich der landwirtschaftlichen Nutzfläche die Arbeitsstellung eines vorderen Rechgeräts positionsabhängig eingestellt und verändert werden, welches in Fahrtrichtung einem zugeordneten hinteren Rechgerät vorgelagert ist. Es kann vorgesehen sein, dass das vordere Rechgerät zwischen der proximalen und der distalen Arbeitsstellung verlagert wird. Dem vorderen wie auch dem hinteren Rechgerät kann auf der gegenüberliegenden Seite des Tragrahmens jeweils ein Rechgerät zugeordnet sein.

Das eine oder die mehreren Rechgeräte können beim Einstellen der proximalen und / oder der distalen Arbeitsstellung in eine Arbeitsstellung verlagert werden, die verschieden ist von einer proximalen Endstellung sowie einer distalen Endstellung. Es können mehrere Arbeitsstellungen vorgesehen sein, in denen das jeweilige Rechgerät in unterschiedlichem seitlichen Abstand zum Tragrahmen angeordnet ist. Die proximale Endstellung betrifft eine vollständig zum Tragrahmen hin verlagerte Arbeitsstellung des zugeordneten Rechgeräts. Dementsprechend bezieht sich die distale Endstellung auf eine vollständig vom Tragrahmen weg verlagerte Endstellung, sodass ein weiteres Wegbewegen von dem Tragrahmen nicht ermöglicht ist. Beim Steuern des Rechgeräts während des Durchfahrens des Teilbereichs der landwirtschaftlichen Nutzfläche, in welcher das Erntegut entlang der nichtgeraden Linie verteilt ist, kann von einer mittleren Arbeitsstellung ausgehen, die ein Verlagern sowohl in Richtung der proximalen Endstellung wie auch in Richtung der distalen Endstellung ermöglicht. In einer Ausführung kann vorgesehen sein, das Rechgerät in die mittlere Arbeitsstellung zu verlagern, wenn in den Teilbereich der landwirtschaftlichen Nutzfläche eingefahren wird. Auf diese Weise ist das zugeordnete Rechgerät vorbereitet, dann die verschiedenen Arbeitsstellungen einzunehmen, die der nichtgeraden Linie in dem Teilbereich der landwirtschaftlichen Nutzfläche folgen.

In einem Eckbereich der landwirtschaftlichen Nutzfläche können zwei zueinander im Wesentlichen quer stehende Schwade hergestellt werden, welche jeweils entlang einer geraden Schwadlinie verlaufen. In dem Eckbereich können Ränder der landwirtschaftlichen Nutzfläche in einem Winkel von etwa 90° aufeinander stoßen. Aber auch Winkel, die größer oder kleiner als 90° sind, können vorhanden sein. In einer Ausgestaltung kann vorgesehen sein, dass ein Rechgerät beim Durchfahren des Eckbereichs in eine distale Arbeitsstellung verlagert wird, beispielsweise auch die distale Endstellung, um so Erntegut aus dem Eckbereich zu erfassen. Nach dem Durchfahren des Eckbereichs kann das Rechgerät wieder in eine proximale Stellung zurückverlagert werden. Hinsichtlich des Eckbereichs können vor und nach dem unmittelbaren Knickbereich der Ecke geradlinig verlaufende Schwade hergestellt werden, die im Knickbereich selbst beabstandet voneinander sind.

Beim Schwaden des Ernteguts auf der landwirtschaftlichen Nutzfläche kann auf dieser eine die landwirtschaftliche Nutzfläche im Wesentlichen vollständig erfassende Anordnung von Schwaden hergestellt werden, die jeweils entlang einer geraden Schwadlinie verlaufen. Auf diese Weise kann auf der landwirtschaftlichen Nutzfläche beispielsweise eine Anordnung von parallel verlaufenden geraden Schwadlinien hergestellt werden, die die anschließende Aufnahme des Ernteguts erleichtert. Einzelne Schwade können alternativ zueinander schräg stehen.

Die vorangehend in Verbindung mit dem Verfahren beschriebenen Ausgestaltungen können einzeln oder in beliebiger Kombination in Verbindung mit der Anordnung mit der landwirtschaftlichen Maschine zum Schwaden entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Schwaders mit vier Rechgeräten, die als Rechkreisel ausgeführt sind, von oben;
- Fig. 2: eine schematische Blockdarstellung von funktionellen Komponenten zum Nutzen und Steuern des Schwaders;
- Fig. 3: eine schematische Darstellung eines Abschnitts einer landwirtschaftlichen Nutzfläche mit einer randseitigen Ausbuchtung;
- Fig. 4: eine schematische Darstellung eines Abschnitts einer landwirtschaftlichen Nutzfläche mit einem Eckbereich;
- Fig. 5: eine schematische Darstellung einer landwirtschaftlichen Nutzfläche, bei der eine Randseite nichtgerade verläuft;

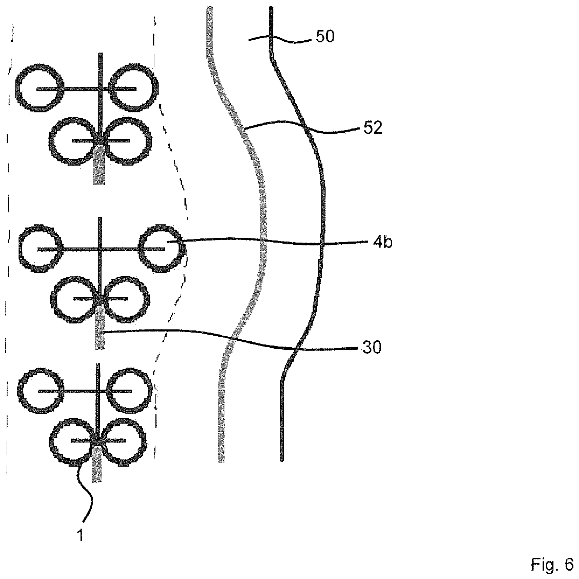

- Fig. 6: eine schematische Darstellung eines Abschnitts einer landwirtschaftlichen Nutzfläche mit einer seitlichen Ausbuchtung; und
- Fig. 7: eine weitere schematische Darstellung eines Abschnitts einer landwirtschaftlichen Nutzfläche mit einer seitlichen Ausbuchtung.

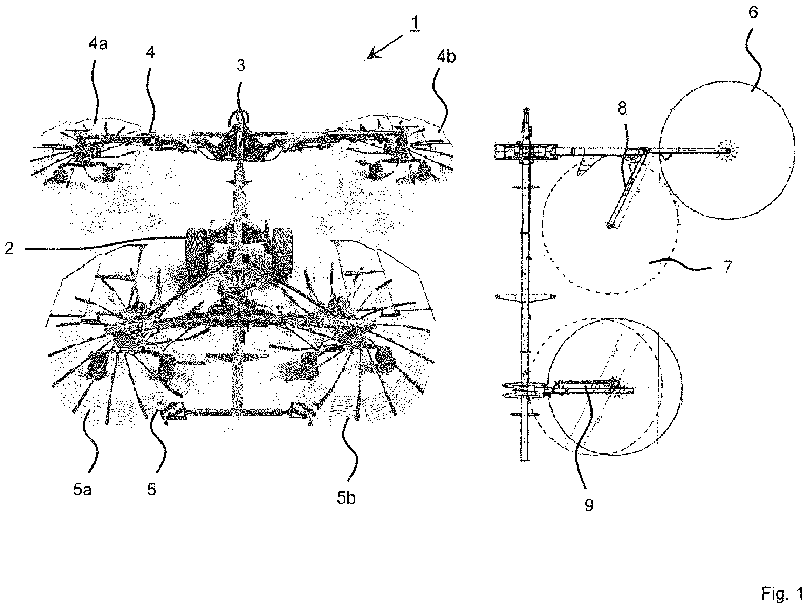

Fig. 1 zeigt eine schematische Darstellung eines Schwaders 1, bei dem an einem Radgestell 2 ein Tragrahmen 3 aufgenommen ist. An dem Tragrahmen 3 sind vordere und hintere Rechgeräte 4, 5 angeordnet, die paarweise gebildet sind. Einander zugeordnete Rechgeräte 4a, 4b sowie 5a, 5b sind bei der gezeigten Ausführungsform als Rechkreisel ausgestaltet. Mithilfe des Schwaders 1 kann ein auf einer landwirtschaftlichen Nutzfläche verteiltes Erntegut geschwadet werden, wobei der Schwader 1 hierbei mit einem Zugfahrzeug (nicht dargestellt) über die landwirtschaftliche Nutzfläche bewegt wird. Schwader 1 und Zugfahrzeug sind dann Teil einer landwirtschaftlichen Maschine, die im alternativen Fall eines selbstfahrenden Schwaders auch von diesem gebildet sein kann.

Wie sich aus der Fig. 1 ergibt, können zumindest die vorderen Rechgeräte 4a, 4b mittels Schwenken zwischen einer in Bezug auf den Tragrahmen 3 distalen Arbeitsstellung 6 und einer proximalen Arbeitsstellung 7 verlagert werden, indem ein Schwenkarm 8 um eine sich vertikal erstreckende Schwenkachse verschwenkt wird.

Auch die hinteren Rechgeräte 5a, 5b können hinsichtlich ihres Abstands zum Tragrahmen 3 verstellt werden, um verschiedene Arbeitsstellungen einzunehmen, indem ein Tragarm 9 verlängert und verkürzt wird.

Darüber hinaus sind die vorderen und die hinteren Rechgeräte 4a, 4b, 5a, 5b jeweils aus der in Fig. 1 gezeigten Arbeitsstellung in eine Nichtarbeitsstellung verlagerbar (nicht dargestellt), in welcher die Rechgeräte 4a, 4b, 5a, 5b nach oben verlagert sind, sodass in der Nichtarbeitsstellung eine Bearbeitung des Ernteguts zum Schwaden nicht möglich ist. Hierbei kann es sich um eine Transportstellung handeln.

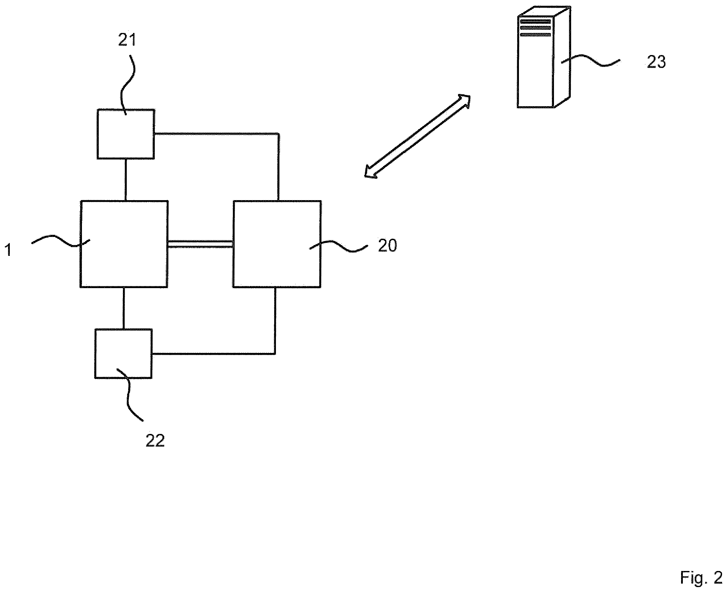

Fig. 2 zeigt eine schematische Blockdarstellung von funktionellen Komponenten einer Anordnung mit zum Nutzen und Steuern des Schwaders 1. Der Schwader 1 koppelt an ein Zugfahrzeug 20, mit dem der Schwader 1 über die landwirtschaftliche Nutzfläche bewegt wird. Vorgesehen ist weiterhin ein Positionsbestimmungssystem 21, mit dem beim Bewegen des Schwaders 1 über die landwirtschaftliche Nutzfläche fortdauernd eine lokale Position bestimmt wird. Die lokale Position kann bezogen auf den Schwader 1 und / oder das Zugfahrzeug 20 bestimmt werden, wobei hierbei ein Abstand zwischen Schader 1 und Zugfahrzeug 20 berücksichtigt werden kann. Das Positionsbestimmungssystem 21 kann beispielsweise ein satellitengestütztes Navigationssystem sein.

Eine Steuereinrichtung 22 ist zum Austausch von elektronischen Daten mit dem Schwader 1 und dem Positionsbestimmungssystem 21 verbunden. Auf diese Weise können in der Steuereinrichtung 22 elektronische Daten verarbeitet werden, um Steuersignale für den Schwader 1 zu erzeugen. Mittels der Steuersignale werden insbesondere die Rechgeräte 4a, 4b, 5a, 5b hinsichtlich ihrer Stellung gesteuert. Hierzu können den Rechgeräten 4a, 4b, 5a, 5b einzeln oder in Gruppen lokale Steuereinrichtung oder -einheiten zugeordnet sein, die die Steuersignale verarbeiten, um bei der Schwadbegradigung insbesondere die jeweilige Verlagerungsstellung der Rechgeräte 4a, 4b, 5a, 5b positionsabhängig einzustellen.

Die verschiedenen Funktionskomponenten können wahlweise Daten mit einer zentralen Servereinrichtung 23 austauschen, welche eine Datenbank aufweisen kann.

In einer Ausführungsform werden mithilfe des Positionsbestimmungssystems 21 fortdauernd Maschinen-Positionsdaten für den Schwader 1 auf der landwirtschaftlichen Nutzfläche erfasst und mit Positionsinformationen verglichen, die einen Teilbereich der landwirtschaftlichen Nutzfläche betreffen, in welchem das zu schwadende Erntegut entlang einer nichtgeraden Linie verteilt ist. Hiervon ausgehend werden in der Steuereinrichtung 22 Steuersignale erzeugt, um die Rechgeräte 4a, 4b, 5a, 5b zum Erfassen (Schwaden) des Ernteguts entlang der nichtgeraden Linie zu steuern, indem insbesondere das vordere Rechgerät 4b zwischen der distalen und der proximalen Stellung 7, 8 und wahlweise hierzwischen angeordneten weiteren Stellungen verlagert wird.

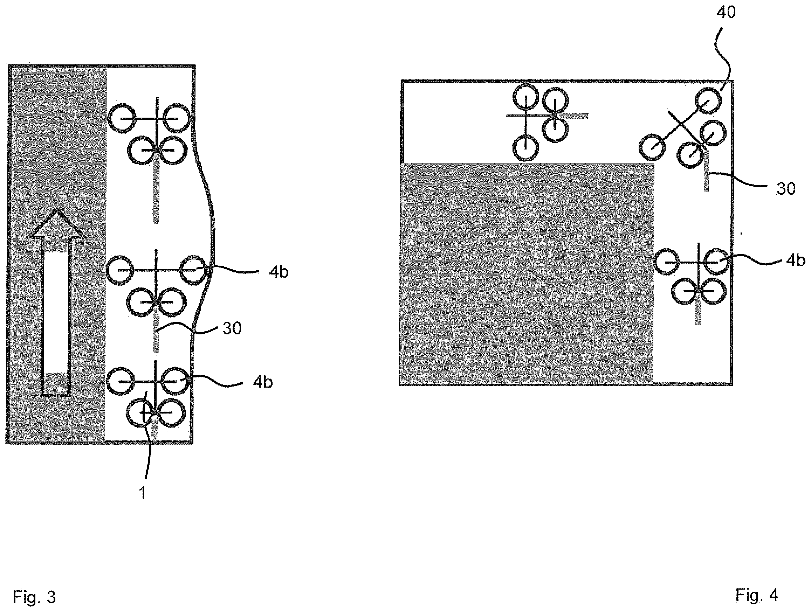

Auf diese Weise ist es ermöglicht, sich nicht entlang einer nichtgeraden Linie erstreckendes Erntegut in einen Schwad 30 zu rechen, der geradlinig verläuft, was in Fig. 3 für einen Abschnitt einer landwirtschaftlichen Nutzfläche schematisch gezeigt ist. In Abhängigkeit von der Position des Schwaders 1 entlang des Fahrwegs wird das vordere Rechgerät 4a aus- und eingefahren. Es wird so der Schwad 30 mit einer geraden Schwadlinie erzeugt. Ein Abstand zwischen der distalen und der proximalen Arbeitsstellung 7, 8 kann in Richtung quer zur Längserstreckung des Tragrahmens 3 beispielsweise 2,75 m betragen.

Fig. 4 zeigt eine schematische Darstellung eines Abschnitts einer landwirtschaftlichen Nutzfläche mit einem Eckbereich 40. Auch bei dieser Ausführungsform wird die Verlagerung des vorderen Rechgeräts 4b zwischen der distalen und der proximalen Arbeitsstellung 7, 8 genutzt, um den Schwad 30 gerader Linie zu erzeugen.

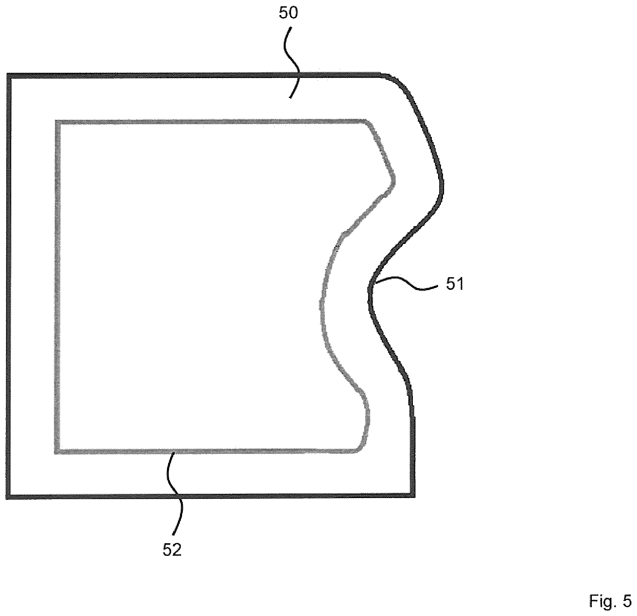

Fig. 5 zeigt eine schematische Darstellung einer landwirtschaftlichen Nutzfläche 50, bei der eine Randseite 51 nichtgerade verläuft. Zunächst ist ein erster Schwad 52 auf einer landwirtschaftlichen Nutzfläche 50 erzeugt, der der äußeren Kontur der landwirtschaftlichen Nutzfläche 50 folgt. Beim Herstellen des ersten Schwads 52 wird die äußere Kontur der landwirtschaftlichen Nutzfläche 50 mittels des Positionsbestimmungssystems 21 erfasst, um danach beim folgenden Abfahren der landwirtschaftlichen Nutzfläche 50 die Rechgeräte 4a, 4b, 5a, 5b zur Schwadbegradigung positionsabhängig zu steuern. Alternativ kann der äußere Umfang der landwirtschaftlichen Nutzfläche 50 zunächst abgefahren werden, ohne dass der erste Schwad 52 erzeugt wird.

Ergänzend zur Steuerung der Rechgeräte 4a, 4b, 5a, 5b bei der Schwadbegradigung kann in Abhängigkeit von den erfassten Maschinen-Positionsdaten und den Positionsinformationen eine automatische Lenkung des Zugfahrzeugs 20 vorgesehen sein, um so die Schwadbegradigung zu unterstützen.

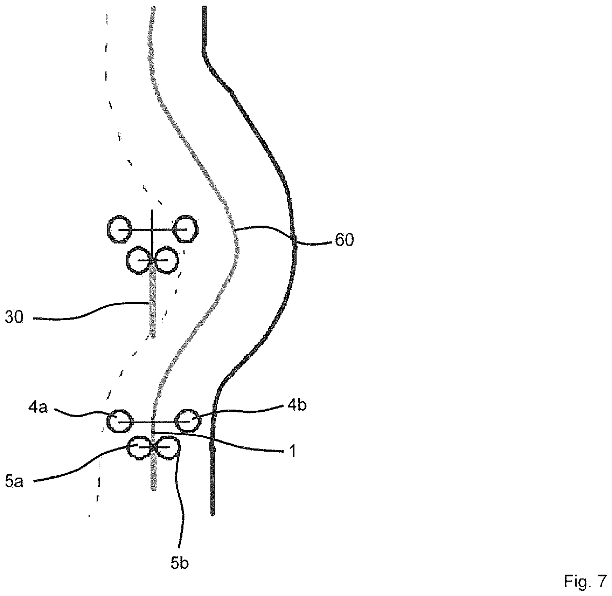

Alternativ oder ergänzend kann beim Herstellen des geradlinigen Schwads ein Anheben in die Nichtarbeitsstellung und ein Wiederabsenken in die Arbeitsstellung vorgesehen sein, was Fig. 7 schematisch zeigt. Das vordere Rechgerät 4b wird angehoben, wenn anhand der Positionsdaten festgestellt wird, dass ein vorhandener Schwad 60 gekreuzt wird, um danach das vordere Rechgerät 4b wieder abzusenken. Die eingesetzten Rechgeräte senken sich lediglich dann in die Arbeitsstellung ab, wenn aufgrund der Positionsdaten bestimmt wird, dass noch nicht bearbeitete Bereiche zu rechen sind.

## Patentansprüche

1. Verfahren zum Steuern einer landwirtschaftlichen Maschine beim Schwaden eines Ernteguts auf einer landwirtschaftlichen Nutzfläche, aufweisend:
- Bereitstellen einer landwirtschaftlichen Maschine mit einem Schwader (1), bei dem an einem Tragrahmen (3) eine Kombination von Rechgeräten (4a, 4b, 5a, 5b) angeordnet ist, die eingerichtet sind, ein Erntegut auf einer landwirtschaftlichen Nutzfläche zu schwaden;
- Bewegen der landwirtschaftlichen Maschine mit dem Schwader (1) auf der landwirtschaftlichen Nutzfläche, um hierbei das Erntegut zu schwaden;
- wiederholtes Bestimmen von Maschinen-Positionsdaten für die landwirtschaftliche Maschine mittels eines Positionsbestimmungssystems (21) während die landwirtschaftliche Maschine auf der landwirtschaftlichen Nutzfläche bewegt wird, wobei die Maschinen-Positionsdaten eine momentane Position der landwirtschaftlichen Maschine auf der landwirtschaftlichen Nutzfläche anzeigen;
- Bereitstellen von elektronischen Ortsinformationen, wobei die elektronischen Ortsinformationen Positionsinformationen umfassen, die eine Verteilung des zu schwadenden Ernteguts entlang einer nichtgeraden Linie in einem Teilbereich der landwirtschaftlichen Nutzfläche anzeigen; und
- Steuern der Rechgeräte (4a, 4b, 5a, 5b) mittels von einer Steuereinrichtung (22) erzeugten Steuersignalen, wenn bei einer Datenverarbeitung der Maschinen-Positionsdaten und der Positionsinformationen mittels der Steuereinrichtung (22) bestimmt wird, dass das Erntegut in dem Teilbereich der landwirtschaftlichen Nutzfläche geschwadet wird, derart, dass eine Arbeitsstellung einer oder mehrerer Rechgeräte (4a, 4b, 5a, 5b) positionsabhängig eingestellt und verändert wird, um das entlang der nichtgeraden Linie verteilte Erntegut in einen Schwad zu schwaden, welcher entlang einer geraden Schwadlinie verlaufend hergestellt wird, wobei beim positionsabhängigen Einstellen und Verändern der Arbeitsstellung das eine oder die mehreren Rechgeräte (4a, 4b, 5a, 5b) zwischen einer angehobenen Nichtarbeitsstellung sowie einer abgesenkten Arbeitsstellung und / oder, in Bezug auf den Tragrahmen (3), zwischen einer proximalen sowie einer distalen Arbeitsstellung verlagert werden.

2. Verfahren nach Anspruch 1, **dadurch gekennzeichnet, dass** bei der landwirtschaftlichen Maschine der Schwader (1) an ein Zugfahrzeug koppelt, mit dem der Schwader (1) über die landwirtschaftliche Nutzfläche bewegt wird, und dass bei dem Zugfahrzeug eine positionsabhängige automatische Lenksteuerung ausgeführt wird, zumindest wenn bei der Datenverarbeitung der Maschinen-Positionsdaten und der Positionsinformationen mittels der Steuereinrichtung (22) bestimmt wird, dass das Erntegut in dem Teilbereich der landwirtschaftlichen Nutzfläche geschwadet wird.

3. Verfahren nach Anspruch 2, **dadurch gekennzeichnet, dass** beim Bereitstellen der elektronischen Ortsinformationen zum Bestimmen der die Positionsinformation Nutzflächeninformationen verarbeitet werden, die zumindest eine äußere Umfangskontur der landwirtschaftlichen Nutzfläche anzeigen.

4. Verfahren nach mindestens einem der vorangehenden Ansprüche, **dadurch gekennzeichnet, dass** die Positionsinformationen vor dem Schwaden beim Mähen und / oder Wenden des Ernteguts und / oder beim Abfahren der landwirtschaftlichen Nutzfläche erfasst werden.

5. Verfahren nach mindestens einem der vorangehenden Ansprüche, **dadurch gekennzeichnet, dass** beim Schwaden des Ernteguts entlang der nichtgeraden Linie in dem Teilbereich der landwirtschaftlichen Nutzfläche die Arbeitsstellung mindestens eines der Rechgeräte (4a, 5a) auf einer Seite des Tragrahmens (3) positionsabhängig eingestellt und verändert wird, wohingegen sich die Arbeitsstellung für ein oder alle Rechgeräte (4b, 5b), die auf einer gegenüberliegenden Seite des Tragrahmens (3) angeordnet sind, unverändert bleibt.

6. Verfahren nach mindestens einem der vorangehenden Ansprüche, **dadurch gekennzeichnet, dass** beim Schwaden des Ernteguts entlang der nichtgeraden Linie in dem Teilbereich der landwirtschaftlichen Nutzfläche die Arbeitsstellung eines vorderen Rechgeräts (4a, 4b) positionsabhängig eingestellt und verändert wird, welches in Fahrtrichtung einem zugehordneten hinteren Rechgerät (5a, 5b) vorgelagert ist.

7. Verfahren nach mindestens einem der vorangehenden Ansprüche, **dadurch gekennzeichnet, dass** das eine oder die mehreren Rechgeräte (4a, 4b, 5a, 5b) beim Einstellen der proximalen und / oder die distalen Arbeitsstellung in eine Arbeitsstellung verlagert wird, die verschieden ist von einer proximalen Endstellung sowie einer distalen Endstellung.

8. Verfahren nach mindestens einem der vorangehenden Ansprüche, **dadurch gekennzeichnet, dass** in einem Eckbereich der landwirtschaftlichen Nutzfläche zwei zueinander im Wesentlichen quer stehende Schwade hergestellt werden, welche jeweils entlang einer geraden Schwadlinie verlaufen.

9. Verfahren nach mindestens einem der vorangehenden Ansprüche, **dadurch gekennzeichnet, dass** beim Schwaden des Ernteguts auf der landwirtschaftlichen Nutzfläche auf dieser eine die landwirtschaftliche Nutzfläche im Wesentlichen vollständig erfassende Anordnung von Schwaden hergestellt wird, die jeweils entlang einer geraden Schwadlinie verlaufen.

10. Anordnung mit einer landwirtschaftlichen Maschine zum Schwaden eines Ernteguts auf einer landwirtschaftlichen Nutzfläche, welche einen Schwader (1) aufweist, bei dem an einem Traggestell (3) eine Kombination von Rechgeräten (4a, 4b, 5a, 5b) angeordnet ist, die eingerichtet sind, ein Erntegut auf einer landwirtschaftlichen Nutzfläche zu schwaden, einem Positionsbestimmungssystem (21) und einer Steuereinrichtung (22), wobei die Anordnung eingerichtet ist, beim Schwaden des Ernteguts auf der landwirtschaftlichen Nutzfläche mittels der landwirtschaftlichen Maschine gemäß einem Verfahren nach mindestens einem der vorangehenden Ansprüche gesteuert zu werden.

## Claims

1. A method for controlling an agricultural machine when windrowing a crop on a usable agricultural area, having:
- providing an agricultural machine comprising a windrower (1), in the case of which a combination of raking devices (4a, 4b, 5a, 5b) is arranged on a supporting frame (3), said raking devices (4a, 4b, 5a, 5b) being configured to windrow a crop on a usable agricultural area;
- moving the agricultural machine with the windrower (1) on the usable agricultural area, in order to thereby windrow the crop;
- repeated determination of machine position data for the agricultural machine by means of a position-determining system (21) while the agricultural machine is being moved on the usable agricultural area, wherein the machine position data indicate a current position of the agricultural machine on the usable agricultural area;
- providing electronic location information, wherein the electronic location information comprises position information, which indicates a distribution of the crop to be windrowed along a non-linear line in a partial region of the usable agricultural area; and
- controlling the raking devices (4a, 4b, 5a, 5b) by means of control signals, which are generated by a control device (22), when during data processing of the machine position data and of the position information by means of the control device (22) it is determined that the crop is being windrowed in the partial region of the usable agricultural area such that a working position of one or more raking devices (4a, 4b, 5a, 5b) is set and changed depending on the position in order to windrow the crop, which is distributed along the non-linear line, into a windrow, which is produced so as to run along a straight windrowing line, wherein during the position-dependent setting and changing of the working position, the one or more raking devices (4a, 4b, 5a, 5b) is/are moved between a raised non-working position and a lowered working position and/or is/are moved between a proximal as well as a distal working position with respect to the supporting frame (3).

2. The method according to claim 1, **characterized in that** in the case of the agricultural machine, the windrower (1) couples to a towing vehicle, by means of which the windrower (1) is moved across the useful agricultural area, and that in the case of the towing vehicle, a position-dependent automatic steering control is carried out, at least when it is determined in response to the data processing of the machine position data and of the position information by means of the control device (22) that the crop is windrowed in the partial region of the useful agricultural area.

3. The method according to claim 2, **characterized in that** useful area information, which displays at least an outer peripheral contour of the useful agricultural area, is processed when providing the electronic location information for determining the position information.

4. The method according to at least one of the preceding claims, **characterized in that** the position information is captured prior to the windrowing when mowing and/or tedding the crop and/or when driving across the useful agricultural area.

5. The method according to at least one of the preceding claims, **characterized in that** the working position of at least one of the raking devices (4a, 5a) is set and adjusted depending on the position on one side of the supporting frame (3) when windrowing the crop along the non-linear line in the partial region of the useful agricultural area, whereas the working position for one or all raking devices (4b, 5b), which are arranged on an opposite side of the supporting frame (3), remains unchanged.

6. The method according to at least one of the preceding claims, **characterized in that** the working position of a front raking device (4a, 4b), which is positioned upstream of an assigned rear raking device (5a, 5b) in the driving direction, is set and changed depending on the position when windrowing the crop along the non-linear line in the partial region of the useful agricultural area.

7. The method according to at least one of the preceding claims, **characterized in that** the one or the more raking devices (4a, 4b, 5a, 5b) is/are displaced when setting the proximal and/or the distal working position into a working position, which differs from a proximal end position as well as a distal end position.

8. The method according to at least one of the preceding claims, **characterized in that** two swaths, which stand essentially transversely to one another and which each run along a straight windrowing line, are produced in a corner area of the useful agricultural area.

9. The method according to at least one of the preceding claims, **characterized in that** when windrowing the crop on the useful agricultural area, an arrangement, which captures the useful agricultural area essentially completely, of swaths, which each run along a straight windrowing line, is produced.

10. An arrangement comprising a agricultural machine for windrowing a crop on a usable agricultural area, which has a windrower (1), in the case of which a combination of raking devices (4a, 4b, 5a, 5b) is arranged on a supporting frame (3), said raking devices being configured to windrow a crop on a usable agricultural area, a position determining system (21), and a control device (22), wherein the arrangement is configured to be controlled by means of the agricultural machine according to a method according to at least one of the preceding claims, when windrowing the crop on the useful agricultural area.

## Revendications

1. Procédé pour la commande d'une machine agricole lors de l'andainage d'un produit de récolte sur une surface d'exploitation agricole, présentant :
- la mise à disposition d'une machine agricole avec un andaineur (1) où une combinaison de dispositifs à râteaux (4a, 4b, 5a, 5b) est disposée sur un cadre de support (3), lesquels dispositifs sont étudiés pour andainer un produit de récolte sur une surface d'exploitation agricole ;
- le déplacement de la machine agricole avec l'andaineur (1) sur la surface d'exploitation agricole pour andainer de la sorte le produit de récolte ;
- la détermination répétée de données de position de machine pour la machine agricole au moyen d'un système de détermination de position (21) pendant que la machine agricole est déplacée sur la surface d'exploitation agricole, dans lequel les données de position de machine indiquent une position momentanée de la machine agricole sur la surface d'exploitation agricole ;
- la mise à disposition d'informations électroniques de localisation, dans lequel les informations électroniques de localisation comprennent des informations de position qui indiquent une répartition du produit de récolte à andainer le long d'une ligne non droite dans une zone partielle de la surface d'exploitation agricole ; et
- la commande des dispositifs à râteaux (4a, 4b, 5a, 5b) au moyen de signaux de commande générés par un dispositif de commande (22) si, lors d'un traitement de données des données de position de machine et des informations de position, on détermine au moyen du dispositif de commande (22) que le produit de récolte est andainé dans la zone partielle de la surface d'exploitation agricole de telle sorte qu'une position de travail d'un ou plusieurs dispositifs à râteaux (4a, 4b, 5a, 5b) est réglée et modifiée dépendant de la position pour andainer le produit de récolte réparti le long de la ligne non droite en un andain, lequel est réalisé de manière à s'étendre le long d'une ligne d'andainage droite, dans lequel, lors du réglage et de la modification dépendant de la position de la position de travail, ce ou ces dispositifs à râteaux (4a, 4b, 5a, 5b) sont déplacés entre une position de repos relevée ainsi qu'une position de travail abaissée et/ou, par rapport au cadre de support (3), entre une position de travail proximale ainsi que distale.

2. Procédé selon la revendication 1, **caractérisé en ce qu'**avec la machine agricole, l'andaineur (1) est accouplé à un véhicule tracteur avec lequel l'andaineur (1) est déplacé sur la surface d'exploitation agricole et qu'au niveau du véhicule tracteur, une commande de pilotage automatique dépendant de la position est exécutée au moins lorsque l'on détermine, lors du traitement de données des données de position de machine et des informations de position au moyen du dispositif de commande (22), que le produit agricole est andainé dans la zone partielle de la surface d'exploitation agricole

3. Procédé selon la revendication 2, **caractérisé en ce que**, lors de la mise à disposition des informations électroniques de localisation pour déterminer l'information de position, des informations de surface d'exploitation sont traitées, lesquelles indiquent au moins un contour périphérique extérieur de la surface d'exploitation agricole.

4. Procédé selon l'une au moins des revendications précédentes, **caractérisé en ce que** les informations de position sont détectées avant l'andainage lors du fauchage et/ou du retournement du produit de récolte et/ou en parcourant la surface d'exploitation agricole

5. Procédé selon l'une au moins des revendications précédentes, **caractérisé en ce que**, lors de l'andainage du produit de récolte le long de la ligne non droite dans la zone partielle de la surface d'exploitation agricole, la position de travail d'au moins l'un des dispositifs à râteaux (4a, 5a) sur un côté du cadre de support (3) est réglée et modifiée dépendant de la position, alors que la position de travail pour un ou tous les dispositifs à râteaux (4b, 5b) disposés sur un côté situé en vis-à-vis du cadre de support (3) reste par contre inchangée.

6. Procédé selon l'une au moins des revendications précédentes, **caractérisé en ce que**, lors de l'andainage du produit de récolte le long de la ligne non droite dans la zone partielle de la surface d'exploitation agricole, la position de travail d'un dispositif à râteaux avant (4a, 4b) est réglée et modifiée dépendant de la position, lequel dispositif est disposé, dans le sens du déplacement, devant un dispositif à râteaux arrière (5a, 5b).

7. Procédé selon l'une au moins des revendications précédentes, **caractérisé en ce que** ce ou ces dispositifs à râteaux (4a, 4b, 5a, 5b) sont déplacés dans une position de travail lors du réglage de la position de travail proximale et/ou distale, laquelle est différente d'une position finale proximale ainsi que d'une position finale distale.

8. Procédé selon l'une au moins des revendications précédentes, **caractérisé en ce que**, dans une zone d'angle de la surface d'exploitation agricole, deux andains sensiblement transversaux l'un par rapport à l'autre sont réalisés, lesquels s'étendent respectivement le long d'une ligne d'andainage droite.

9. Procédé selon l'une au moins des revendications précédentes, **caractérisé en ce que**, lors de l'andainage du produit de récolte sur la surface d'exploitation agricole, on réalise sur celle-ci un agencement, occupant sensiblement complètement celle-ci, d'andains qui s'étendent respectivement le long d'une ligne d'andainage droite.

10. Dispositif avec une machine agricole pour andainer un produit de récolte sur une surface d'exploitation agricole, lequel présente un andaineur (1), dans lequel une combinaison de dispositifs à râteaux (4a, 4b, 5a, 5b) est mise en place sur un cadre de support (3), lesquels sont étudiés pour andainer un produit de récolte sur une surface d'exploitation agricole, un système de détermination de position (21) et un dispositif de commande (22), dans lequel le dispositif est étudié pour être commandé, lors de l'andainage du produit de récolte sur la surface d'exploitation agricole au moyen de la machine agricole, selon un procédé selon l'une au moins des revendications précédentes.
